# EUROPEAN PATENT APPLICATION

(11) **EP 3 543 571 A1**
(43) Date of publication of application: **25.09.2019**
(21) Application number: 17872666.7
(22) Date of filing: 15.11.2017
(51) Int. Cl.: F16J 15/38, F04B 39/00, F04B 53/00, F04D 29/12, F16J 15/36

(54) **MECHANICAL SEAL**

(30) Priority: 16.11.2016 JP 2016223616
(71) Applicant: Eagle Industry Co., Ltd., Minato-ku Tokyo 105-8587 (JP)
(72) Inventor: INOUE Hiroki, Tokyo 105-8587 (JP); NEGISHI Yuta, Tokyo 105-8587 (JP); KOSUGI Sayaka, Tokyo 105-8587 (JP); INOUE Hideyuki, Tokyo 105-8587 (JP); HOSOE Takeshi, Tokyo 105-8587 (JP)
(74) Representative: WSL Patentanwälte Partnerschaft mbB
(86) International application number: PCT/JP2017/041078
(87) International publication number: WO 2018/092801

(57) **Abstract**

{Technical Problem}

Provide a mechanical seal that includes a spring with a long life.

{Solution to Problem}

The mechanical seal includes a housing 2 through which a rotation shaft 4 of a rotary machine extends, a stationary seal ring 10 that is held by the housing 2, a rotating seal ring 20 that rotates together with the rotation shaft 4 and is brought into sliding contact with the stationary seal ring 10, a spring 40 that biases the rotating seal ring 20 toward the stationary seal ring 10, a collar 50 that holds the spring 40 and is fixed to the rotation shaft 4, and a spring cover 60 that is provided such that it covers, in a sealed state, from a radially outer side, the spring 40 and rotational components 25 (20, 30) including the rotating seal ring 20, the spring cover 60 being provided in a state in which it cannot move in the axial direction of the rotation shaft 4.

## Description

### {TECHNICAL FIELD}

The present invention relates to a mechanical seal that is suitable for various types of rotary machines, such as electric motors, engines, pumps, mixing machines, powder machines, compressors, and the like, and that restricts leakage of a sealed fluid.

### {BACKGROUND ART}

A mechanical seal includes a rotating seal ring and a stationary seal ring. The rotating seal ring can be moved in an axial direction by a spring or the like due to wear on sealing faces, and the stationary seal ring does not move in the axial direction. The mechanical seal acts to restrict leakage of a sealed fluid at the sealing faces, which rotate in relation to each other and are substantially perpendicular to a shaft. In a mechanical seal described in Patent Citation 1, a rotating-side retainer extends on a machine interior side and forms a sealed space in which a spring is disposed, and a synthetic resin spiral packing or the like that has two or less than windings and that can expand and contract in a radial direction is provided on the rotating-side retainer, thereby making it difficult for a fluid, a slurry, or the like that has leaked from the sealing faces to enter the sealed space in which the spring is disposed. (Refer to Patent Citation 1, for example.)

### {CITATION LIST}

### {Patent Literature}

Patent Citation 1: JP H06-29565 Y2 (Page 2, FIG. 1)

### {SUMMARY OF INVENTION}

### {Technical Problem}

However, in Patent Citation 1, the rotating-side retainer is a member that can move together with the rotating seal ring in the axial direction, and it is structured such that a portion of the retainer on the radially outer side of the spring extends on the machine interior side of the spring. Specifically, the rotating-side retainer is structured such that a side face of the retainer that is pressed by the spring has a large surface area. Therefore, when the rotating-side retainer moves in the axial direction due to wear or the like on the rotating seal ring and the stationary seal ring, the change in volume of the sealed space in which the spring is disposed becomes greater. This means that there is a tendency to diminish the functioning of the spring, and thus the fluid or the slurry may enter the sealed space. Furthermore, because air is sealed inside the sealed space in which the spring is disposed, the fluid, the slurry, or the like that has entered the sealed space easily reaches the spring, which tends to further diminish the functioning of the spring.

The present invention seeks to address this problem by providing a mechanical seal that includes a spring with a long life.

### {Solution to Problem}

In order to solve the problem, a mechanical seal according to the present invention includes
a housing through which a rotation shaft of a rotary machine extends,
a stationary seal ring that is held by the housing,
a rotating seal ring that rotates together with the rotation shaft and is brought into sliding contact with the stationary seal ring,
a spring that biases the rotating seal ring toward the stationary seal ring,
a collar that holds the spring and is fixed to the rotation shaft, and
a spring cover that is provided such that the spring cover covers, in a sealed state, from a radially outer side, the spring and rotational components including the rotating seal ring, the spring cover being provided in a state in which the spring cover cannot move in the axial direction of the rotation shaft.

According to this configuration, the component on the side of the rotating seal ring is configured such that it can move in the axial direction on the radially inner side of the spring cover, and because the component on the side of the rotating seal ring is disposed on the radially inner side of the spring cover, there is little concern that foreign matter will enter the sealed space, even though the component on the side of the rotating seal ring moves in the axial direction due to wear and the like on the rotating seal ring and the stationary seal ring, so a mechanical seal that includes a spring with a long life can be provided.

A space between the spring cover and the spring may be filled with a filling fluid, such as oil, water, grease.

According to this configuration, because the space between the spring cover and the spring is filled with the filling fluid, there is little concern that foreign matter will enter the gaps in the spring and impair the functioning of the spring.

The spring cover may be detachably attached to the collar, a first secondary seal may be disposed between the spring cover and the collar, and a second secondary seal may be disposed between the spring cover and the component on the side of the rotating seal ring.

According to this configuration, because the spring cover can be attached to and detached from the collar, the operability of assembling and disassembling the mechanical seal is good. The collar is also fixed to the rotation shaft, so it is possible to mount the spring cover securely on the collar.

The spring cover may be cylindrical.

According to this configuration, there is little unevenness on the outer circumference of the spring cover, and the spring cover has substantially no rotational resistance when it rotates.

The spring cover may be cup-shaped, with an opening provided in a bottom portion.

According to this configuration, because the spring cover is cup-shaped and a corner portion is provided in the bottom portion of the spring cover, the spring cover can easily be positioned in relation to the collar.

A third secondary seal may be disposed between the rotation shaft and an inner circumferential portion of the bottom portion.

According to this configuration, the quality of the seal with a machine exterior side is improved.

The spring and the spring cover may be provided on an exterior side of the rotary machine.

This feature makes it possible to inhibit the entry of dust and the like from the exterior side of the machine.

The spring cover may be made of metal.

According to this configuration, any heat that is transmitted to the spring cover through the filling fluid can be efficiently dissipated from the spring cover.

A filling hole through which the filling fluid is supplied may be provided in the spring cover.

According to this configuration, the filling fluid can be resupplied without removing the spring cover.

### {BRIEF DESCRIPTION OF DRAWINGS}

FIG. 1 is a section view that shows the entirety of a first embodiment of the mechanical seal according to the present invention.
FIG. 2 is an oblique view of rotational components including a seal ring before a spring cover is mounted on it in the first embodiment.
FIG. 3 is an oblique view of the spring cover in the first embodiment.

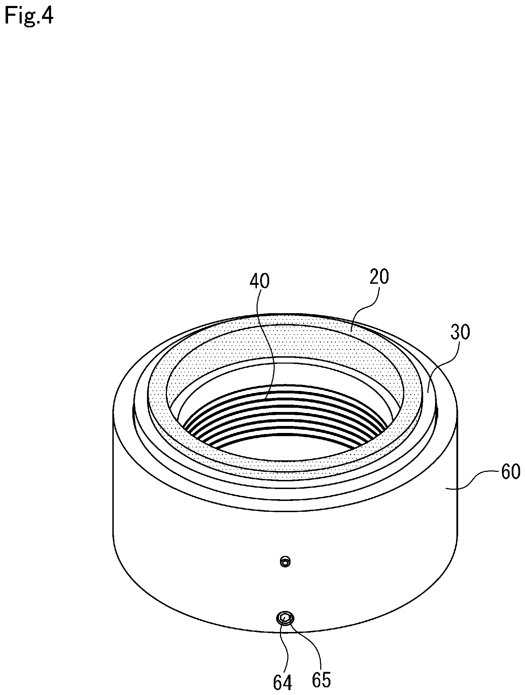

FIG. 4 is an oblique view of the component on the side of the seal ring in the first embodiment.
FIG. 5 is a section view that shows the entirety of a second embodiment of the mechanical seal according to the present invention.
FIG. 6 is an oblique view of the spring cover in the second embodiment.
FIG. 7 is a section view that shows the entirety of a third embodiment of the mechanical seal according to the present invention.
FIG. 8 is a section view that shows the entirety of a fourth embodiment of the mechanical seal according to the present invention.

### {DESCRIPTION OF EMBODIMENTS}

Hereinafter, the mechanical seal according to the present invention will be explained based on embodiments thereof. Note that the present invention is not to be interpreted as being limited by this explanation, and various types of modifications, revisions, and improvements that are based on the knowledge of persons skilled in the art may be made within the scope of the claims.

### First embodiment

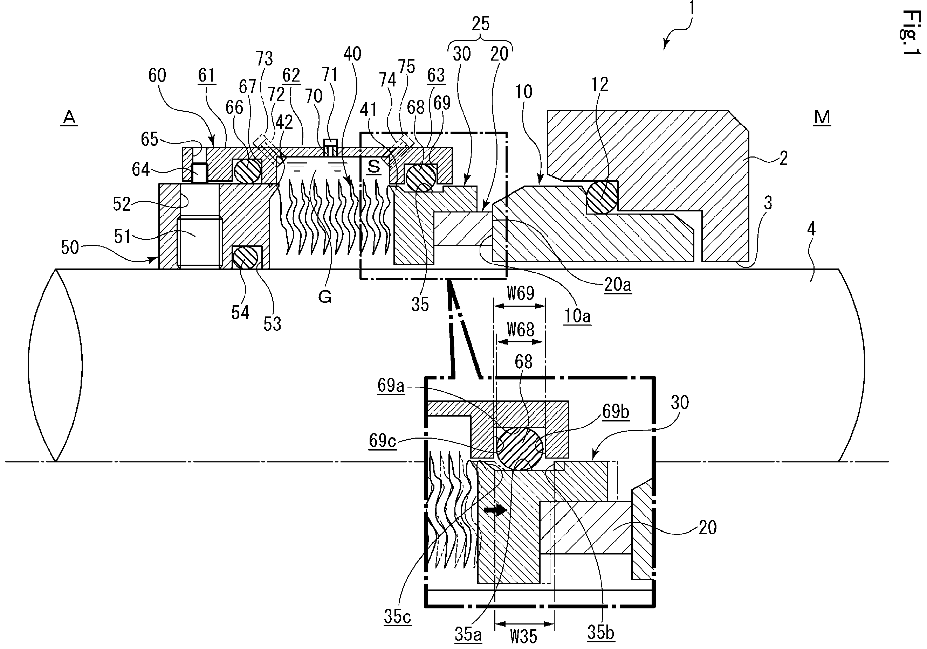

As shown in FIG. 1, a mechanical seal 1 is mainly configured from a mating ring (a stationary seal ring) 10, a seal ring (a rotating seal ring) 20, a seal ring retainer 30, a bellows (a spring) 40, a collar 50, and a spring cover 60. The mechanical seal 1 is mounted between a housing 2 of a rotary machine and a rotation shaft 4 that is disposed such that it extends through a shaft hole 3 of the housing 2 and is in communication with a machine exterior A of the rotary machine. The machine exterior A is an atmosphere of seawater, water, air, or the like, and a machine interior M has a fluid sealed therein.

The mating ring 10 is mounted on the housing 2 via an O-ring 12 such that it does not rotate in relation to the housing 2. The seal ring 20 is mounted on the rotation shaft 4 through other components so as to rotate integrally with the rotation shaft 4. The mating ring 10 and the seal ring 20 are disposed such that they are opposite one another in the axial direction of the rotation shaft 4, and the tight contact between sliding surfaces 10a, 20a, which are opposite end faces of the mating ring 10 and the seal ring 20, allows the sealed fluid to be sealed. In other words, the mechanical seal 1 is an outside type of mechanical seal that restricts leakage of the sealed fluid from the radially inner side of the mechanical seal 1 to the radially outer side.

Both the mating ring 10 and the seal ring 20 are formed from a hard sliding material (ceramic such as silicon carbide, for example).

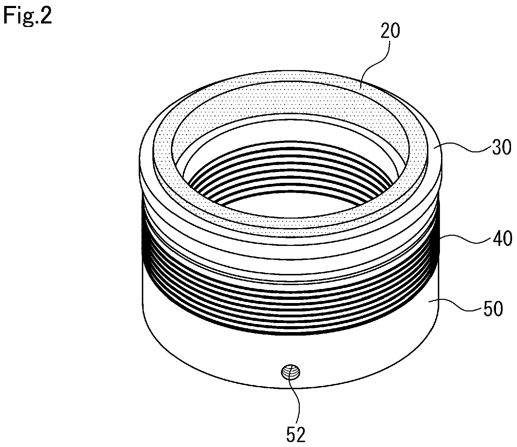

The seal ring 20 is fixed to the seal ring retainer 30 via a known knock pin or the like(not shown) by a shrink fit such that the seal ring 20 does not rotate in relation to the seal ring retainer 30. The bellows 40 is made of metal (for example, stainless steel) and has a ring-shaped bellows form. The bellows 40 is disposed in a compressed state between the seal ring retainer 30 and the collar 50, and its ends 41, 42 are welded in a fluid-tight manner to the seal ring retainer 30 and the collar 50, respectively. A ring-shaped recessed portion 35 is formed in the outer circumference of the seal ring retainer 30 and is recessed radially inward from the outer circumference. The collar 50 is fixed to the rotation shaft 4 by screwing a set screw 51 into a threaded hole 52 such that the collar 50 does not rotate in relation to the rotation shaft 4. A ring-shaped recessed portion 53 is formed in the inner circumference of the collar 50 and is recessed radially outward from the inner circumference. An O-ring 54 is mounted in the ring-shaped recessed portion 53, improving the quality of the seal between the collar 50 and the rotation shaft 4. In the first embodiment, the seal ring 20 and the seal ring retainer 30, both of which move in the axial direction, will collectively be called rotational components 25 including the seal ring (FIGS. 1, 2).

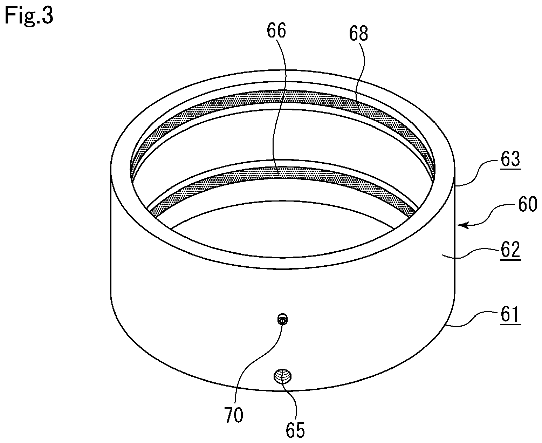

The spring cover 60 is cylindrical and is made of a metal such as stainless steel, for example. The spring cover 60 has what is called a cantilever construction, being configured mainly from three portions: a thick-walled fixed portion 61, a thin-walled portion 62 that is disposed facing the bellows 40, and a thick-walled free end portion 63 in order from the machine exterior space A in the radial direction (FIGS. 1, 3). A sealed space S between the inner circumferential side of the spring cover 60 and the outer circumferential side of the bellows 40 is filled with a grease G (a filling fluid), and the space on the inner circumferential side of the bellows 40 is treated as part of a space on the side of the machine interior M. Note that the sealed space S is a space that is defined by the outer circumference of the bellows 40, a portion of the seal ring retainer 30, an O-ring 68 (a second secondary seal), a portion of the inner circumference of the spring cover 60, an O-ring 66 (a first secondary seal), and a portion of the collar 50.

The fixed portion 61 of the spring cover 60 is fixed to the collar 50 by screwing a set screw 64 into a threaded hole 65 such that the fixed portion 61 does not rotate in relation to the collar 50. The O-ring 66 seals the space between the spring cover 60 and the collar 50 and is mounted in a ring-shaped recessed portion 67, which is formed in the inner circumference of the fixed portion 61 and is recessed radially outward from the inner circumferential face. The ring-shaped recessed portion 67 is closer to the seal ring 20 than the set screw 64. The O-ring 68 seals the space between the spring cover 60 and the seal ring retainer 30 and is mounted in a ring-shaped recessed portion 69, which is formed in the inner circumference of the free end portion 63 and is recessed radially outward from the inner circumferential face.

In the thin-walled portion 62, a through-hole 70 (a filling hole) is provided that radially extends through the thin-walled portion 62 and is constantly sealed by a sealing bolt 71. Removing the sealing bolt 71 makes it possible to fill the sealed space S with the grease G through the through-hole 70. The grease G can thus be resupplied without attaching and detaching the spring cover 60. The through-hole 70 may also be provided in other locations. For example, if a through-hole 72 and a sealing bolt 73, as well as a through-hole 74 and a sealing bolt 75, are provided in respective end portions in the axial direction of the sealed space S, the mechanical seal 1 can be made compatible with a vertically oriented rotary machine in which the rotation shaft 4 is disposed in a vertical orientation. In that case, it would be preferable for the through-holes 72, 74 to be inclined toward the axial center of the bellows 40, so that it would be easier to fill the vertically oriented rotary machine with grease.

Referring to the enlarged view in FIG. 1, the O-ring 68 is held in a clamped state between a bottom face 35a of the ring-shaped recessed portion 35 and a bottom face 69a of the ring-shaped recessed portion 69, the bottom face 35a and the bottom face 69a being disposed opposite one another. The O-ring 68 is configured such that, in this clamped state, an axial length W68 of the O-ring 68 is less than a distance W35 between side faces 35b, 35c of the ring-shaped recessed portion 35. In the same manner, the O-ring 68 is configured such that the axial length W68 is less than a distance W69 between side faces 69b, 69c of the ring-shaped recessed portion 69. Thus, the O-ring 68 maintains the integrity of the sealing of the sealed space S, even though the seal ring retainer 30 moves in relation to the spring cover 60 in the axial direction as the bellows 40 expands slightly in the axial direction, due to wear and the like on the mating ring 10 and the seal ring 20. The spring cover 60 is thus provided in a state that enables the bellows 40 to expand and contract.

As described above, the spring cover 60 is configured such that it covers the radially outer side of the bellows 40 in a fluid-tight manner and is removably fixed to the collar 50. The configuration also enables the rotational components 25 on the side of the seal ring to move in the axial direction on the radially inner side of the spring cover 60. Providing the spring cover 60 in this configuration makes it possible to inhibit the entry of foreign matter into the sealed space S. That in turn can reduce the possibility that foreign matter will become trapped in the bellows portions in the outer circumference of the bellows 40 or that the bellows 40 itself will be corroded or the like by foreign matter. The structure of the mechanical seal 1 can also be simplified such that the bellows 40 itself doubles as a secondary seal for the sealed space S. Furthermore, even though the rotational components 25 on the side of the seal ring moves in the axial direction due to wear and the like on the mating ring 10 and the seal ring 20, the fact that the rotational components 25 on the side of the seal ring is disposed on the radially inner side of the spring cover 60 means that any change in volume of sealed space S is less than in the embodiment that is disclosed in Patent Citation 1, in which the spring cover 60 provided radially outward of the spring moves in the axial direction. Therefore, any changes in pressure inside the sealed space S are diminished, which reduces the possibility that foreign matter will enter the sealed space S as the pressure changes. It is therefore possible to make the mechanical seal 1 such that the bellows 40 will have a long life. Moreover, the presence of the thin-walled portion 62 of the spring cover 60 makes it possible for any changes in pressure to be absorbed by the deflecting of the thin-walled portion 62 in the radial direction.

Furthermore, because the sealed space S is filled with the grease G, it is difficult for foreign matter to enter the sealed space S, and the movement of any foreign matter that does enter is limited by the viscosity of the grease G. Accordingly, there is little concern that foreign matter will get into the gaps in the bellows 40 and impair the functioning of the spring.

The spring cover 60 is detachably fixed to the collar 50 by the set screw 64, the O-ring 66 is disposed between the spring cover 60 and the collar 50, and the O-ring 68 is disposed between the spring cover 60 and the seal ring retainer 30. The spring cover 60 can thus be fixed to and removed from the collar 50, so the operability of assembling and disassembling the mechanical seal 1 is good. The collar 50 is also fixed to the rotation shaft 4, so it is possible to mount the spring cover 60 securely on the collar 50.

Furthermore, unlike the structure in Patent Citation 1 (in which the rotating-side retainer has a cantilever beam structure that extends on the machine interior side, and the base end of the retainer holds the rotating seal ring), the O-ring 66 is interposed between the spring cover 60 and the collar 50, so the collar 50 will not tilt, even if an external force for inclining the spring cover 60 in relation to the axis is applied from the side of the machine exterior A.

In addition, because the spring cover 60 is cylindrical, there is little unevenness on its outer circumferential face, and the spring cover 60 has substantially no rotational resistance during rotation.

Furthermore, because the bellows 40 and the spring cover 60 are provided on the side of the machine exterior A of the rotary machine, the entry of dust and the like from the side of the machine exterior A can be restricted.

Because the spring cover 60 is made of metal, any heat that is transmitted to the spring cover 60 through the grease G, such as heat that is generated by the sliding of the mating ring 10 and the seal ring 20 against one another, for example, can be efficiently dissipated from the spring cover 60.

### Second embodiment

Hereinafter, the second embodiment of the mechanical seal according to the present invention will be explained. The second embodiment differs from the first embodiment mainly in that a spring cover 260 is cup-shaped. Note that explanations will be omitted for any structural elements that are the same as in the first embodiment.

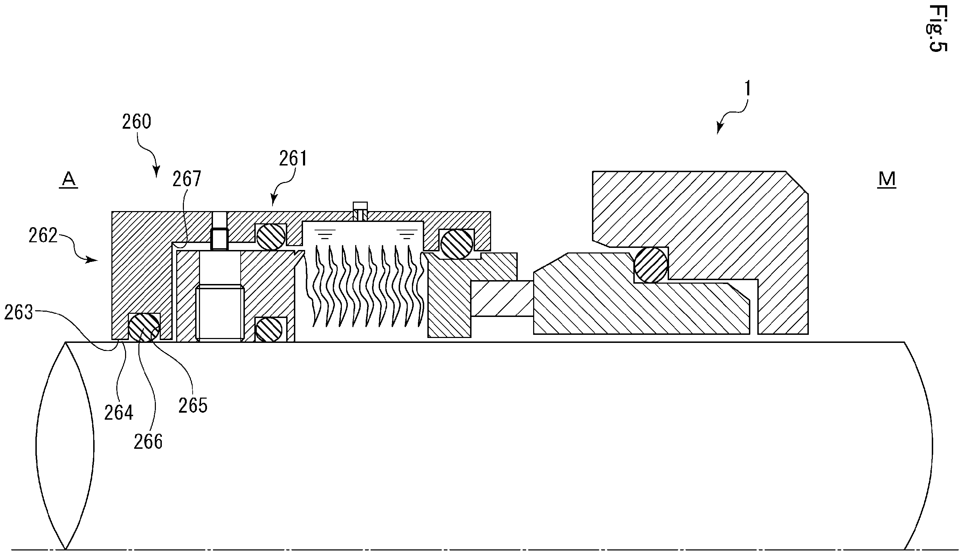

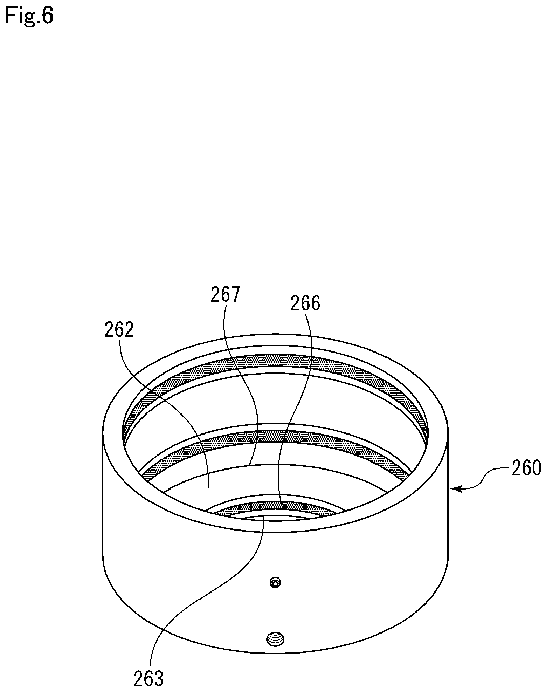

As shown in FIGS. 5 and 6, the spring cover 260 is made of metal, such as stainless steel, for example, and it is substantially cup-shaped, including a cylindrical portion 261 and a bottom portion 262, with an opening 263 being provided at the center of the bottom portion 262. A ring-shaped recessed portion 265 that is recessed outward in the radial direction is provided in an inner circumferential portion 264 of the bottom portion 262, with an O-ring 266 (a third secondary seal) being disposed in the ring-shaped recessed portion 265. The quality of the seal between the spring cover 260 and the rotation shaft 4 is thus improved, as is the quality of the seal with respect to the set screw 51 and the collar 50. The quality of the seal with respect to the rotation shaft 4 is also improved. In addition, because the spring cover 260 is cup-shaped and a corner portion 267 is provided on the inner side of the cylindrical portion 261 and the bottom portion 262, the spring cover 260 can easily be positioned in relation to the collar 50. Note that the cylindrical portion 261 has substantially the same configuration as the spring cover 60 in the first embodiment, so an explanation of the cylindrical portion 261 will be omitted.

### Third embodiment

Hereinafter, the third embodiment of the mechanical seal according to the present invention will be explained. The third embodiment differs from the first embodiment mainly in that a coil spring 340 is replaced with the bellows 40. Note that explanations will be omitted for any structural elements that are the same as in the first embodiment.

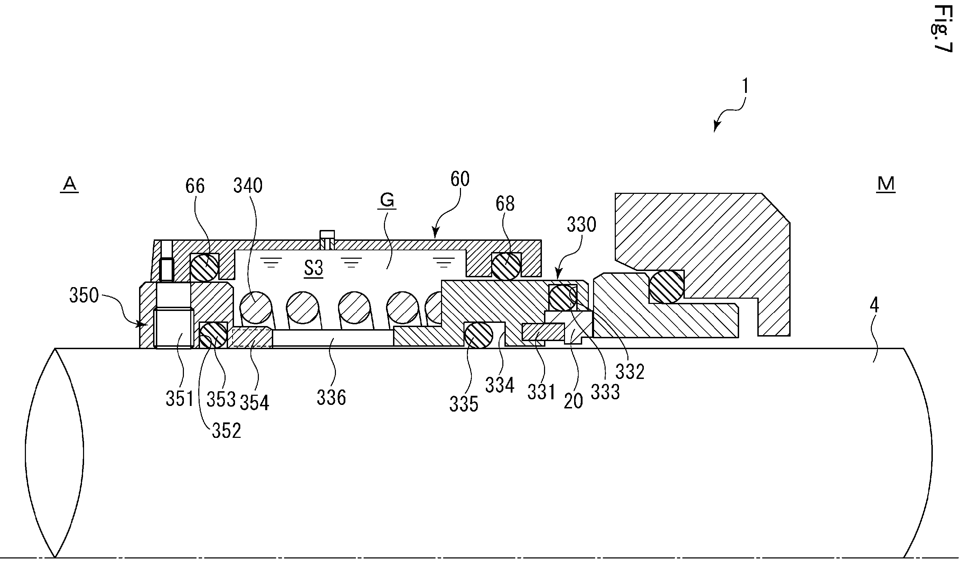

As shown in FIG. 7, the seal ring 20 is mounted on the seal ring retainer 330 via a knock pin 331 such that the seal ring 20 does not rotate in relation to the seal ring retainer 30. The coil spring 340 is made of metal, and it is disposed in a compressed state between a seal ring retainer 330 and a collar 350. A ring-shaped recessed portion 332 is formed in the inner circumference of the seal ring retainer 330 and is recessed radially outward from the outer circumferential face. An O-ring 333 is disposed in the ring-shaped recessed portion 332. A ring-shaped recessed portion 334 is formed in the inner circumference of the seal ring retainer 330 and is recessed radially outward from the inner circumference. An O-ring 335 is disposed in the ring-shaped recessed portion 334.

A ring-shaped recessed portion 352 is formed in the inner circumference of the collar 350 and is recessed radially outward from the inner circumference. An O-ring 353 is disposed in the ring-shaped recessed portion 352. A set screw 351 fixes the collar 350 to the rotation shaft 4 via the O-ring 353 in a fluid-tight manner.

A sealed space S3 in which the coil spring 340 is disposed is filled with the grease G. Note that the sealed space S3 is a space that is defined by the O-ring 335, a portion of the seal ring retainer 330, the O-ring 68, a portion of the inner circumference of the spring cover 60, the O-ring 66, a portion of the collar 350, the O-ring 353, and a portion of the rotation shaft 4.

The seal ring retainer 330 is provided with engagement portions 336 that are provided closer to collar 350 than the ring-shaped recessed portion 334 and extends through the interior of the coil spring 340, the engagement portions 336 being evenly circumferentially spaced. The engagement portions 336 are fitted into an axially recessed portion 354 that is provided in the collar 350. The engagement portion 336s are able to move in the axial direction in relation to the axially recessed portion 354, but its movement in the direction of rotation is restricted, so the rotational force of the rotation shaft 4 is transmitted to the seal ring retainer 330 through the engagement portions 336.

### Fourth embodiment

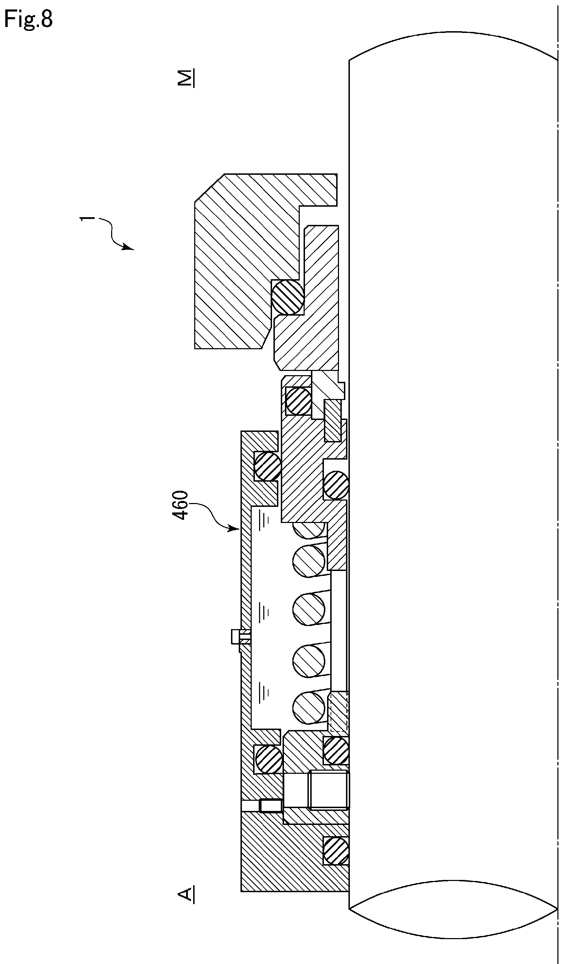

Hereinafter, the fourth embodiment of the mechanical seal according to the present invention will be explained. The fourth embodiment, which is shown in FIG. 8, differs from the third embodiment mainly in that a spring cover 460 is cup-shaped. The cup shape is the same as the structure of the spring cover 260 in the second embodiment. Note that explanations will be omitted for any structural elements that are the same as in the first and third embodiments.

Heretofore, the aforesaid embodiments of the present invention have been explained according to the drawings, but specific structural elements are not limited to those in the embodiments that have been explained, and modifications and additions that are within the scope of the claims are included in the present invention.

For example, in the embodiments that are described above, an example of an outside mechanical seal was explained that restricts a sealed fluid on the machine interior side from leaking to the radially outer side, but the present invention may also be what is called an inside mechanical seal that treats a fluid on the machine exterior side as the sealed fluid.

An example has also been explained in which both the mating ring and the seal ring are formed from a hard sliding material (ceramic such as silicon carbide, for example), but any material may be used for the mating ring and the seal ring. For example, the mating ring may be formed from a hard sliding material, and the seal ring may be formed from a carbon sliding material.

An example has also been explained in which the spring cover is detachably attached to the collar, but the spring cover and the collar may also be integrally formed.

An example has also been explained in which the material of the spring cover is the metal stainless steel, but provided that the spring cover is a rigid body, it may also be made from a material other than metal, such as fiber-reinforced plastic (FRP), for example.

An example has also been explained in which the spring cover is connected via an O-ring to the seal ring retainer, which is a part of the component on the side of the seal ring, but the spring cover may also be connected via an O-ring to a different part of the seal ring component, such as the seal ring, for example.

Sealing measures other than O-rings may also be used as the secondary seals.

An example has also been explained in which the sealed space is filled with grease, but the filling fluid may also be a fluid other than grease, such as oil or water, for example. An embodiment in which no filling liquid is used is also acceptable.

### {REFERENCE SIGNS LIST}

- 1: Mechanical seal
- 2: Housing
- 4: Rotation shaft
- 10: Mating ring (stationary seal ring)
- 20: Seal ring (rotating seal ring)
- 25: Rotational components including the seal ring
- 30: Seal ring retainer
- 40: Bellows (spring)
- 50: Collar
- 60: Spring cover
- 61: Fixed portion
- 62: Thin-walled portion
- 63: Free end portion
- 64: Set screw
- 65: Threaded hole
- 66: O-ring (first secondary seal)
- 68: O-ring (second secondary seal)
- 70: Through-hole (refilling hole)
- 260: Spring cover
- 262: Bottom portion
- 263: Opening
- 264: Inner circumferential portion
- 266: O-ring (third secondary seal)
- 330: Seal ring retainer
- 333: O-ring
- 340: Coil spring (spring)
- 350: Collar
- 360: Spring cover
- 460: Spring cover
- A: Machine exterior
- M: Machine interior
- G: Grease
- S: Sealed space
- S3: Sealed space

## Claims

1. A mechanical seal, comprising:
a housing through which a rotation shaft of a rotary machine extends;
a stationary seal ring that is held by the housing;
a rotating seal ring that rotates together with the rotation shaft and is brought into sliding contact with the stationary seal ring;
a spring that biases the rotating seal ring toward the stationary seal ring;
a collar that holds the spring and is fixed to the rotation shaft; and
a spring cover that is provided such that the spring cover covers, in a sealed state, from a radially outer side, the spring and rotational components including the rotating seal ring, the spring cover being provided in a state in which the spring cover cannot move in the axial direction of the rotation shaft.

2. The mechanical seal according to claim 1, wherein
a space between the spring cover and the spring is filled with a filling fluid, such as oil, water, grease.

3. The mechanical seal according to claim 1 or 2, wherein
the spring cover is detachably attached to the collar,
a first secondary seal is disposed between the spring cover and the collar, and
a second secondary seal is disposed between the spring cover and the component on the side of the rotating seal ring.

4. The mechanical seal according to any one of claims 1 to 3, wherein
the spring cover is cylindrical.

5. The mechanical seal according to any one of claims 1 to 3, wherein
the spring cover is cup-shaped, with an opening provided in a bottom portion.

6. The mechanical seal according to claim 5, wherein
a third secondary seal is disposed between the rotation shaft and an inner circumferential portion of the bottom portion.

7. The mechanical seal according to any one of claims 1 to 6, wherein
the spring and the spring cover are provided on an exterior side of the rotary machine.

8. The mechanical seal according to any one of claims 1 to 7, wherein
the spring cover is made of metal.

9. The mechanical seal according to claim 2, wherein
a filling hole through which the filling fluid is supplied is provided in the spring cover.
